Europäisches Patentamt

European Patent Office

Office européen des brevets

(11) Veröffentlichungsnummer: **0 313 075**
**A2**

## (12) EUROPÄISCHE PATENTANMELDUNG

(21) Anmeldenummer: 88117583.0

(51) Int. Cl.⁴: **B60N 1/00**

(22) Anmeldetag: 21.10.88

(30) Priorität: 22.10.87 TR 63064/87

(43) Veröffentlichungstag der Anmeldung:
26.04.89 Patentblatt 89/17

(84) Benannte Vertragsstaaten:
**AT DE ES FR GB IT**

(71) Anmelder: **Kiliç, Selim**
**Mustafa Kemal Cad. No. 84/3**
**Bornova-Izmir(TR)**

(72) Erfinder: **Kiliç, Selim**
**Mustafa Kemal Cad. No. 84/3**
**Bornova-Izmir(TR)**

(74) Vertreter: **von Bülow, Tam, Dipl.-Ing.,**
**Dipl.-Wirtsch.-Ing. et al**
**SAMSON & BÜLOW Widenmayerstrasse 5**
**D-8000 München 22(DE)**

(54) **Schlafsesselanordnung für Busse, Reisezugwagen, Flugzeuge oder Schiffe.**

(57) Eine Schlafsesselanordnung für Busse, Reisezugwagen, Flugzeuge oder Schiffe mit in Sitzreihen hintereinander angeordneten Sesseln (1a ... 10d), deren Rückenlehne (25) gegenüber der Sitzfläche (24) kippbar ist, sieht
Hebeeinrichtungen (38) vor, mit denen einzelne Sessel oder Gruppen von Sesseln (1, 3, 5, 7, 9) angehoben
werden können, während zwischen den anhebbaren Sesseln angeordnete Sessel (2, 4, 6, 8, 10) fest mit dem
Boden (22) verbunden sind. Sodann können alle Sessel durch Zurückklappen ihrer Rückenlehne und ggf.
Ausfahren von Fußstützen zu einem Bett verändert werden.

Fig. 2

EP 0 313 075 A2

EP 0 313 075 A2

## Schlafsesselanordnung für Busse, Reisezugwagen, Flugzeuge oder Schiffe

Die Erfindung bezieht sich auf eine Schlafsesselanordnung gemäß dem Oberbegriff des Patenanspruches 1. Derartige Schlafsesselanordnungen sind heute weit verbreitet. Nachteilig an diesen Schlafsesseln ist jedoch, daß die Rückenlehne aus Platzgründen nicht in eine horizontale Lage gebracht werden kann, da sie dann mit der Sitzfläche des nächsten Sitzes kollidieren würde. Daher sind die bekannten Schlafsessel in der "Schlafposition" sehr unbequem.

Würde man die Sitzabstände so groß wählen, daß jeder Sitz zu einem Bett umwandelbar ist, so würde der Platzbedarf enorm ansteigen und damit die Transportkapazität des Verkehrsmittels herabsetzen.

Aufgabe der Erfindung ist es, die Schlafsesselanordnung der eingangs genannten Art dahingehend zu verbessern, daß bei geringem Platzbedarf die einzelnen Sessel von einer Sitzposition zu einem bequemen Bett veränderbar sind.

Diese Aufgabe wird durch die im kennzeichnenden Teil des Patentanspruches 1 angegebenen Merkmale gelöst. Vorteilhafte Ausgestaltungen und Weiterbildungen der Erfindung sind den Unteransprüchen zu entnehmen.

Der Grundgedanke der Erfindung besteht darin, daß jeder zweite Sitz von hintereinander angeordneten Schlafsesseln zur Verwandlung als Bett anhebbar ist, so daß Betten in zwei Ebenen übereinander gebildet werden. Damit erhält man in der Sitzposition die herkömmliche, platzsparende Raumaufteilung, während in der "Bettposition" der zusätzlich benötigte Platz aus der Höhe der Kabine des Transportmittels erhalten wird.

Zur Erhöhung der Stabilität sind die anhebbaren Sessel an seitlichen Stützen gehalten, wobei vorzugsweise jeweils für mehrere, in einer Reihe auf einer Seite des Ganges angeordnete Sessel jeweils zwei seitliche Stützen vorgesehen sind und diese "Sesselgruppen" über einen Rahmen miteinander verbunden sind. In diesem Falle genügt es, für je eine Sesselgruppe eine Hebeeinrichtung vorzusehen, die vorzugsweise zwischen den Sesseln angeordnet sind.

Zur Vergrößerung der Liegefläche haben die einzelnen Sessel ausklappbare Fußteile, die in die horizontale Lage gebracht werden können.

Zur weiteren Erhöhung der Stabilität sind zusätzliche Sicherheitspfosten an den nicht anhebbaren Sesseln vorgesehen, wobei diese Sicherheitspfosten Auflagen bzw. Arretierungen aufweisen, an denen die freien Enden der Rückenlehnen und der Fußteile abgestützt bzw. arretiert sind.

Zur Erhöhung des Komforts und der Sicherheit haben die einzelnen Sesseln seitliche Sicherheitsblenden, die den Passagier gegen ein Herausfallen sichern. Diese Sicherheitsblenden können aus den in die Sessel integrierten seitlichen Armlehnen und seitlichen Kopfstützen bestehen.

Zur weiteren Erhöhung der Sicherheit der Passagiere, insbesondere bei einem plötzlichen Abbremsen des Fahrzeuges, sind zusätzliche Fußteile vorgesehen, die in der Bettposition der Sessel senkrecht stehen und damit verhindern, daß die Passagiere bei einem Bremsen nach vorne rutschen.

Die Hebeeinrichtungen sind vorzugsweise Hydraulik- oder Pneumatikzylinder. Es ist jedoch auch möglich, Elektroantriebe mit Zahnstangen oder Gewindespindeln vorzusehen.

Zur weiteren Erhöhung der Sicherheit sind die Hebeeinrichtungen in der hochgehobenen Position arretierbar, so daß bei einem Druckabfall der Hydraulik- oder Pneumatikzylinder die Betten in ihrer angehobenen Position bleiben.

Zur weiteren Verringerung des Platzbedarfes können die Hebeeinrichtungen auch aus einer Kombination von Hydraulik- und Pneumatikzylindern mit Zahnstangen und Ritzel bestehen, wobei beim Ausfahren der Zylinder das Ritzel zwangsweise gedreht wird und damit die Zahnstange weiter vorschiebt, wodurch man ein Übersetzungsverhältnis für den Antrieb erhält.

Im folgenden wird die Erfindung anhand von Ausführungsbeispielen im Zusammenhang mit der Zeichnung ausführlicher erläutert. Es zeigt:

Fig. 1a eine Seitenansicht einer Schlafsesselanordnung in der Sitzposition;

Fig. 1b eine Draufsicht auf die Schlafsesselanordnung der Fig. 1a;

Fig. 1c eine Stirnansicht einer Sitzreihe;

Fig. 2 eine Seitenansicht einzelner Schlafsessel in ihrer Lage als Bett;

Fig. 3 eine Vorderansicht ähnlich Fig. 1c in der Position der Schlafsessel als Bett;

Fig. 4 eine Detailansicht der Einzelheiten A bzw. B der Fig. 2 zur Darstellung des Schwenkmechanismus;

Fig. 5 eine um 90° gedrehte Ansicht der Einzelheit der Fig. 4;

Fig. 6a bis 6c verschiedene Ansichten der Stützen für die Sessel;

2

Fig. 7 zwei Darstellungen der Sicherheitspfosten;

Fig. 8 eine Seitenansicht ähnlich Fig. 2 nach einer Variante der Erfindung mit telescopartig ausfahrbaren Stützen;

Fig. 9a und 9b zwei weitere Varianten der Erfindung, wobei die Variante der Fig. 9b die Stützen und die Hebeeinrichtung zu einer Baueinheit integriert;

Fig. 10 verschiedene Ausgestaltungen der Hebeeinrichtung und

Fig. 11 verschiedene Ausgestaltungen des Schwenkmechanismus.

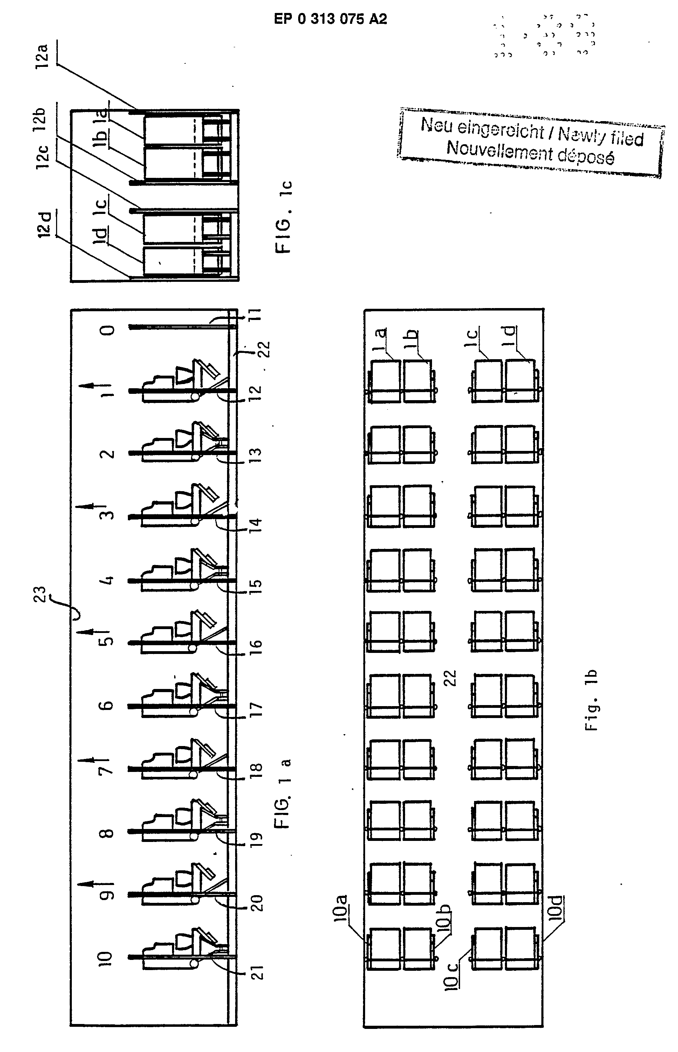

Fig. 1 zeigt eine Schlafsesselanordnung mit zehn Schlafsesselreihen 1 bis 10, die in üblicher Weise hintereinander angeordnet sind. Jede Schlafsesselreihe hat vier Schlafsessel 1a, 1b, 1c, 1d ... 10a, 10b, 10c, 10d. Diese Schlafsessel sind beidseitig des Ganges in Zweiergruppen als Schlafsesselpaare wie z.B. 10a, 10b einerseits und 10c, 10d andererseits angeordnet. In der Reihenfolge der hintereinander angeordneten Schlafsesselpaare ist jedes zweite Schlafsesselpaar anhebbar, also beispielsweise die Schlafsessel der Sitzreihen 1, 3, 5, 7, 9, während die dazwischen liegenden Schlafsessel der Reihen 2, 4, 6, 8 und 10 nicht anhebbar sind. Vielmehr sind diese fest am Boden 22 des Fahrzeuges befestigt.

Die anhebbaren Schlafsessel sind hier pro Schlafsesselpaar zwischen zwei Stützen angeordnet, also beispielsweise den Stützen 12, 14, 16, 18 und 20. Diese Stützen sind fest am Boden 22 verankert.

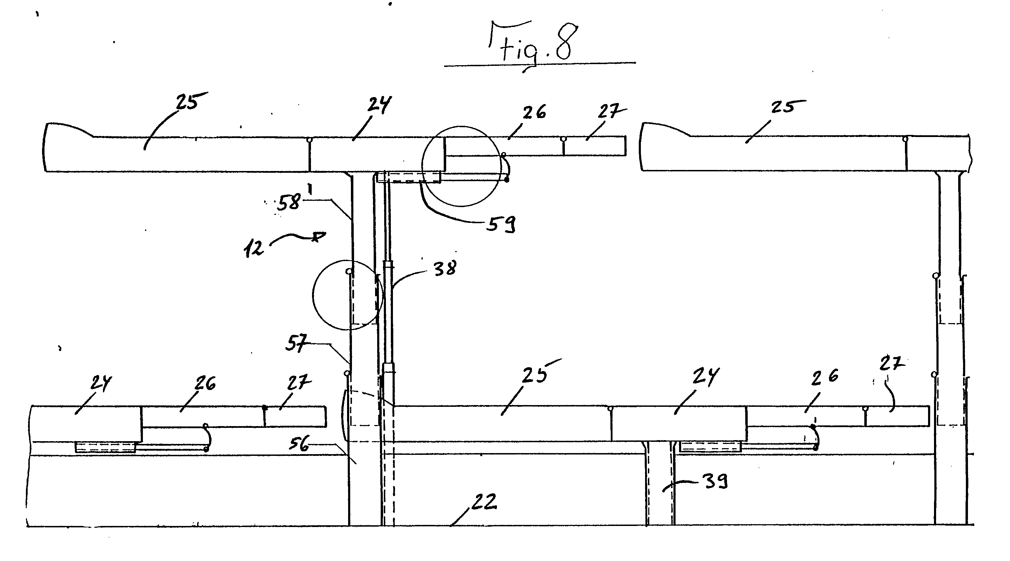

Vor und hinter den anhebbaren Sitzen sind seitlich der nicht anhebbaren Sitze sowie vor der ersten Sitzreihe Sicherheitspfosten 11, 13, 15, 17, 19 und 21 vorgesehen, an denen die hochgefahrenen Sitze in ihrer Position als Bett zusätzlich abgestützt sind. Diese Sicherheitspfosten können aber auch fortgelassen werden, wie im Zusammenhang mit weiteren Ausführungsbeispielen (insbesondere Fig. 9b) erläutert wird.

Zur weiteren Verdeutlichung sind an den Sitzreihen 1, 3, 5, 7 und 9 Pfeile in Richtung zur Decke 23 des Fahrzeuges eingezeichnet, woraus ersichtlich ist, welche Sitze angehoben werden können.

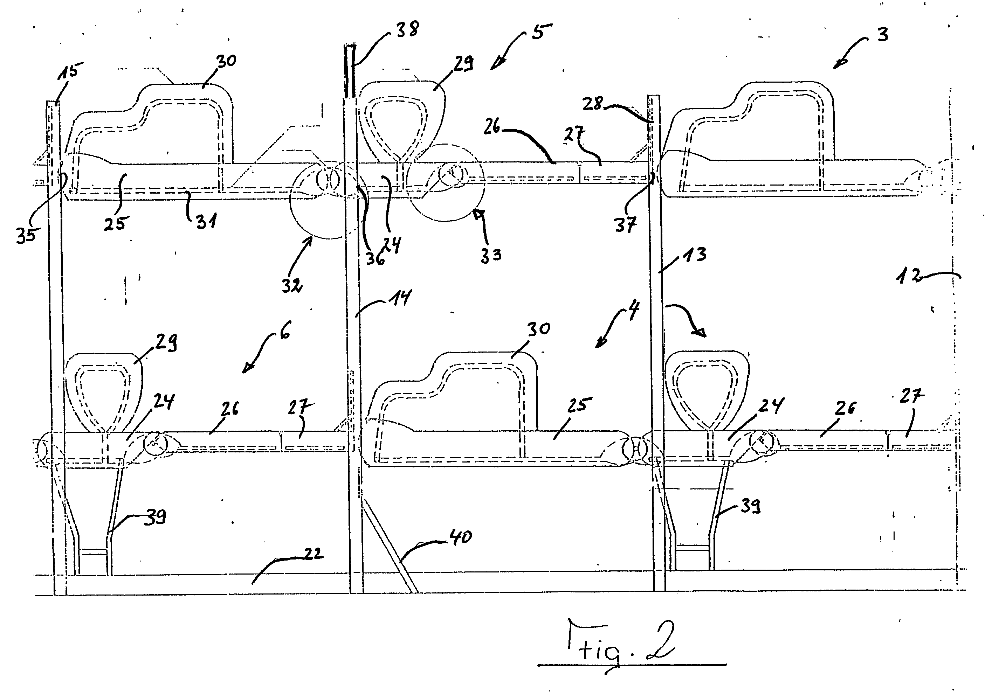

Fig. 2 zeigt Sitze der Reihen 3 bis 6 in ihrer Lage als Bett. Die Sitze der Sitzreihen 4 und 6 sind dabei unten, während die Sitze der Sitzreihen 3 und 5 hochgefahren sind. Die einzelnen Sitze haben ein Sitzteil 24, eine Rückenlehne 25 sowie ausklappbare Fußteile 26, 27 und 28. Weiterhin hat jeder einzelne Sessel am Sitzteil 24 Armlehnenteile 29 sowie Kopfstützen-Seitenteile 30, die in der Position als Bett die Funktion von Sicherheitsblenden haben, die den Passagier gegen ein seitliches Herausfallen sichern.

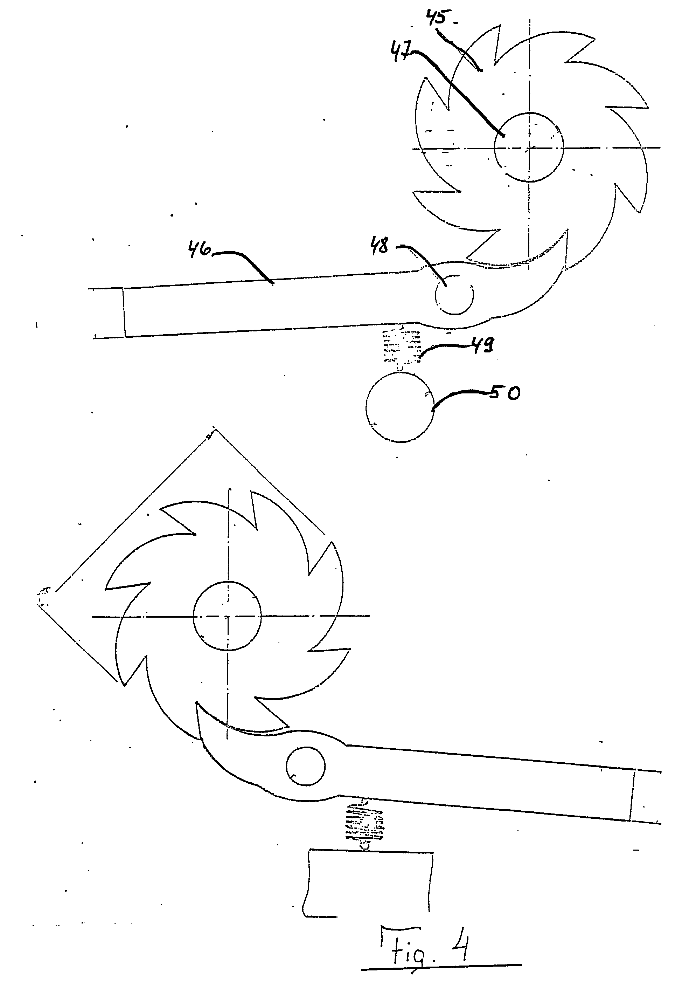

An beiden Enden des Sitzteiles sind zur Verbindung mit der Rückenlehne bzw. dem ersten Fußteil 26 Schwenkmechanismen 32 bzw. 33 vorgesehen, die es ermöglichen, daß das Fußteil 26 und die Rückenlehne 25 von der in Fig. 1a gezeigten Sitzposition in die Bettposition geschwenkt werden können und in der jeweiligen Position verriegelt werden können. Einzelheiten dieser Schwenkmechanismen sind in Fig. 4 dargestellt.

Die Sitze der Sitzreihe 5 sind an den seitlichen Stützen 14 gehalten und durch einen Hebemechanismus 38 angehoben. Zusätzlich ist das freie Ende der Rückenlehne 25 an dem Sicherheitspfosten 15 abgestützt und zwar über eine Abstützung bzw. Verriegelung 35. In gleicher Weise ist das zweite Fußteil 27, das mit dem ersten Fußteil 26 über ein Gelenk 34 verbunden ist, an dem Sicherheitspfosten 13 abgestützt und zwar über eine Verriegelung 37. Das dritte Fußteil 28 verläuft parallel zum Sicherheitspfosten 13 und dient als Sicherheits-Fußstütze bei einem Bremsen des Fahrzeuges.

Die wesentliche Verbindung des Schlafsessels mit einer der Stützen erfolgt über den Rahmen 31 (gestrichelte Linie) mit der Stütze 14 und zwar über eine Führung 36.

Die unteren Sitze sind mit ihrem Sitzteil 24 über Füße 39 fest mit dem Boden 22 des Fahrzeuges verankert, wobei ihre Rückenlehnen und Fußteile an den benachbarten Stützen aufliegen. So liegen beispielsweise das Rückenteil 25 des Sitzes 4 und das zweite Fußteil des Sitzes 6 an der Stütze 14 auf.

Die Stützen können zusätzlich durch Streben 40 mit dem Boden 22 des Fahrzeuges verbunden sein.

Aus Fig. 2 ist deutlich zu erkennen, daß die Länge der einzelnen Betten doppelt so groß ist, wie der Sitzreihenabstand, wobei die einzelnen hintereinander angeordneten Sitze in ihrer Position als Bett sich jeweils zur Hälfte überlappen.

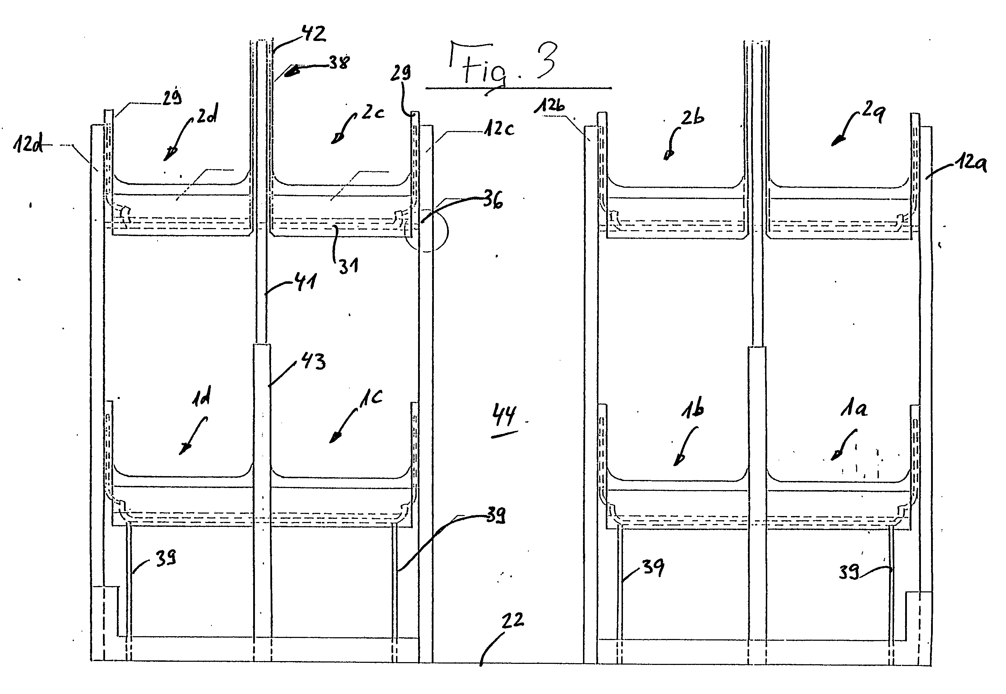

Fig. 3 zeigt eine Stirnansicht der ersten Sitzreihe in ihrer Anordnung als Bett. Hieraus ist deutlicher zu erkennen, daß jeweils die Sitze einer Gruppe, also z. B. die Sitze 1c und 1d bzw. 2c und 2d, zwischen zwei seitlichen Stützen 12c und 12d gehalten sind, während der Hebemechanismus 38 zwischen den Sitzen angreift. Der Hebemechanismus besteht hier aus einer Kolben-Zylinderanordnung mit einem Zylinder 43, der fest am Boden 22 verankert ist und zusätzlich durch die unteren Sitze 1c, 1d und deren Füße 39 abgestützt ist. Eine Kolbenstange 41 greift hier in einer Hülse 42 ein, wobei diese Hülse zwischen den Sitzen 2c und 2d liegt und zwar im Prinzip in deren mittleren Armlehnenteil.

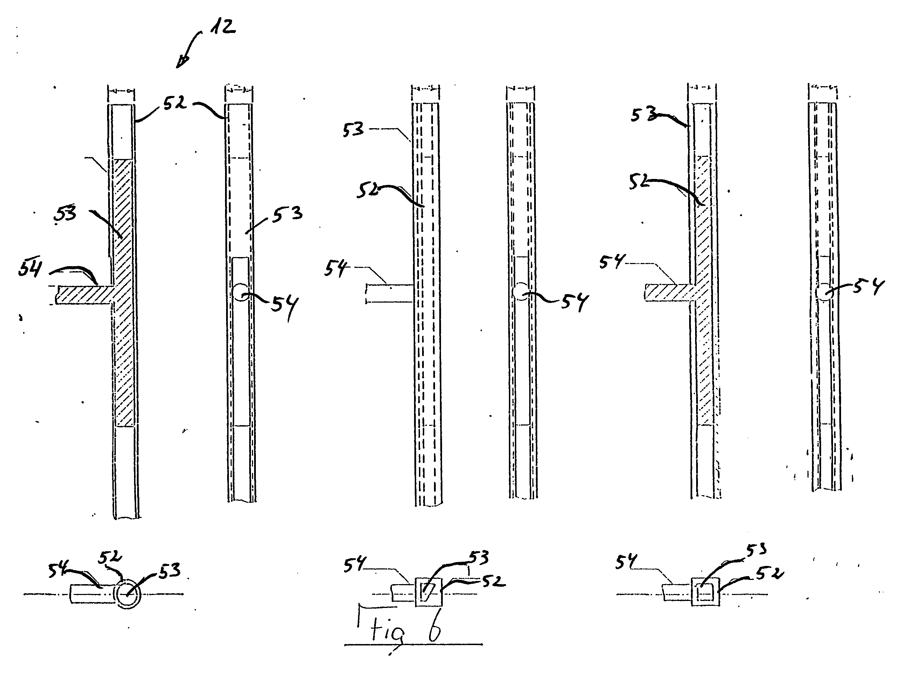

Die Führung des Sitzes 2c an der Stütze 12c ist mit dem Bezugszeichen 36 bezeichnet und wird im Zusammenhang mit Fig. 6 ausführlicher erläutert.

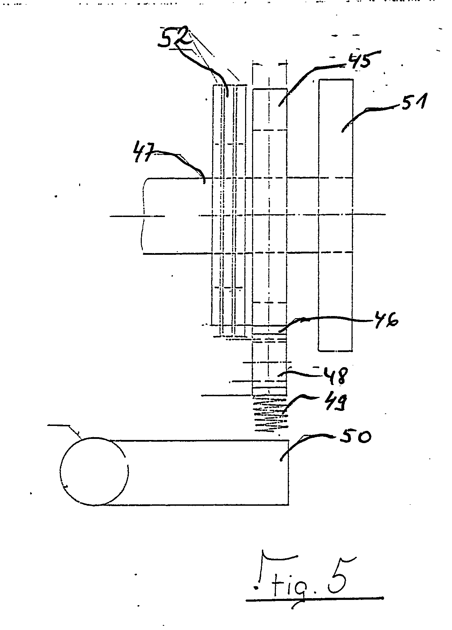

Fig. 4 und 5 zeigen ein Ausführungsbeispiel für die Schwenkmechanismen 32 und 33, die zwischen dem Sitzteil 24 einerseits und der Rückenlehne 25 bzw. dem ersten Fußteil 26 angeordnet sind. Es handelt sich im Prinzip um einen Sperrklinkenmechanismus mit einem Klinken- bzw. Zahnrad 45, das gegenüber einer Achse 47 drehbar ist. Die Achse 47 ist dabei mit einem Sitzteil starr verbunden, während das Zahnrad 45 mit dem anderen Sitzteil starr verbunden ist. Ein Klinkenhebel 46 ist schwenkbar auf einer Achse 48 gehalten und greift mit seinem einen Ende in Zähne des Zahnrades 45 ein, wodurch dieses verriegelt wird. Der Klinkenhebel 46 ist durch eine Zugfeder 49, die an einem feststehenden Teil 50 verankert ist, so vorgespannt, daß der Klinkenhebel 46 das Zahnrad 45 sperrt. Das Zahnrad ist so gestaltet, daß die Sperrklinke nur die Drehung in einer Richtung sperrt und zwar in der Richtung, die ein Absenken von Rückenlehne und/oder Fußteil verhindert. Das Anheben in die Sitzposition ist dagegen ohne Betätigung der Sperrklinke möglich. Es sei jedoch darauf hingewiesen, daß auch andere bekannte Beschläge von Autositzen verwendet werden können. Fig. 5 zeigt noch zusätzlich eine Handhabe 51, die beispielsweise die Form eines Hebels oder eines Betätigungsrades haben kann, mit dem eine Sitzverstellung durchgeführt werden kann. Das Bezugszeichen 52 deutet eine Verbindung zwischen der Achse 47 und dem Rahmen desjenigen Sitzteiles an, das drehfest mit der Achse 47 verbunden ist. Beispielsweise kann es sich hierbei um die Rückenlehne handeln.

Fig. 6 zeigt verschiedene Ausführungsformen der seitlichen Stützen für die anhebbaren Sitze. Im Prinzip haben alle diese Stützen ein äußeres Rohr 52, das kreisförmigen oder eckigen, insbesonderen quadratischen Querschnitt haben kann. Im Inneren dieses Rohres ist eine verschiebliche Stange 53 vorgesehen, deren Querschnittsform so gewählt ist, daß die Stange im Rohr gleiten kann, ohne zuviel Spiel zu haben. An der Stange 53 ist ein horizontal verlaufender Träger 54 vorgesehen, der durch einen Längsschlitz des Rohres hindurch ragt und der fest mit dem Rahmen des zugeordneten Sitzes und zwar speziell mit dem Rahmen des Sitzteiles 24 verbunden ist. Die Länge der Stange 53 ist dabei so gewählt, daß auch über den Träger 54 aufgebrachte Drehmomente sicher abgefangen werden. Dies ist insbesondere dann von größerer Bedeutung, wenn die Sicherheitspfosten 11, 13, 15 ... fortgelassen sind und allein die Stützen 12, 14, 16 ... die angehobenen Sitze tragen.

Fig. 7 zeigt Ausführungsbeispiele der Sicherheitspfosten 11. Auch diese können kreisförmigen oder eckigen und insbesondere quadratischen Querschnitt haben. Sie besitzen in der Höhe der unteren und der oberen Betten seitlich auskragende Anschläge 55 auf denen die freien Enden der Rückenlehnen bzw. Fußteile aufliegen. Diese Anschläge können auch ausklappbar sein und dabei die Form von Schwenkhebeln haben, die nach oben geklappt werden können, wodurch sie bei Nichtgebrauch die Verletzungsgefahr verringern und es vor allem für die von unten nach oben aus der Sitz- in die Bettposition klappbaren Fußstützen ermöglichen, daß diese während des Schwenkvorganges an den Anschlägen vorbeigleiten.

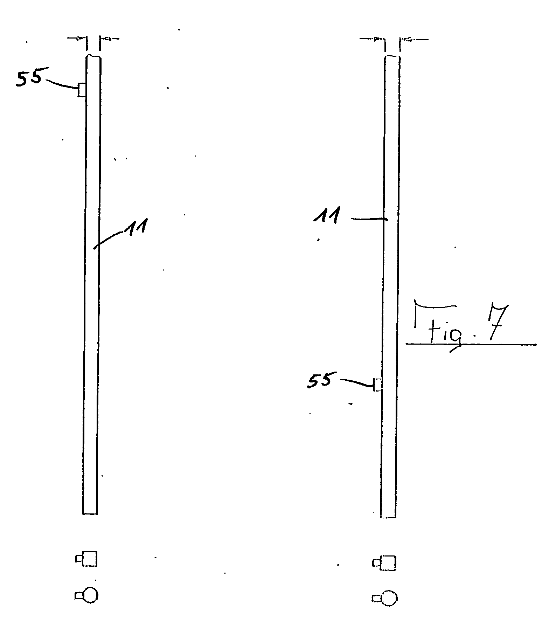

Fig. 8 zeigt eine andere Variante für die Stützen, die hier als Teleskop ausgebildet sind. Diese Stützen bestehen hier aus drei Elementen, nämlich einem unteren Rohr 56, einem darin teleskopartig verschiebbaren mittleren Rohr 57 und einem dritten Rohr 58, welches in dem mittleren Rohr verschieblich geführt ist. Das Sitzteil 24 ist dann an dem dritten Rohr 58 befestigt. Die Länge der Teleskopteile ist so gewählt, daß bei zusammengefahrener Stütze 12 das Sitzteil 24 gerade die normale Sitzhöhe hat.

Fig. 8 zeigt zusätzlich eine weitere Pneumatik- bzw. Hydraulikzylinderanordnung 59, die zum Ausfahren der Fußteile 26 und 27 vorgesehen ist.

Fig. 9 zeigt zwei Varianten für die Anordnung der teleskopartigen Stützen. In Fig. 9a sind die Stützen ähnlich wie im Ausführungsbeispiel der Fig. 3 seitlich neben den Sitzen einer Sitzgruppe angeordnet, während der Hebemechanismus für eine Sitzgruppe in der Mitte zwischen deren Sitzen angreift.

Im Ausführungsbeispiel der Fig. 9b ist pro Sitzgruppe nur noch eine Stütze vorgesehen, die in der Mitte zwischen den Sitzen einer Sitzgruppe angreift und in derem Inneren die Hebeeinrichtung 12 eingebaut ist.

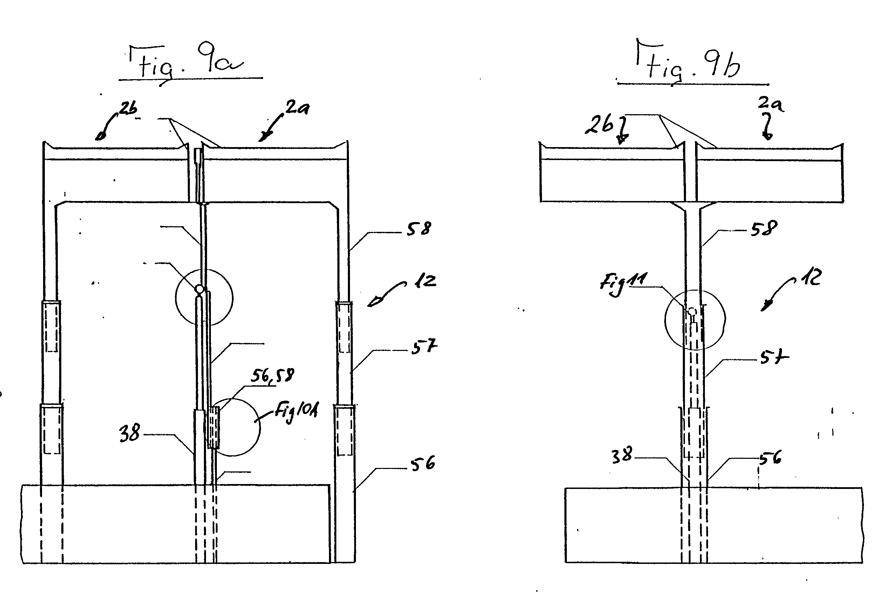

Fig. 10a zeigt Stützen, die als Zahnstangen 56, 57 ausgebildet sind und durch Gleit- oder Rollenlager 58 gegeneinander verschiebbar sind, wodurch das Öffnen und Schließen erleichtert wird. Die eine Zahnstange 56 ist gegenüber der anderen Zahnstange 57 mittels eines Ritzels oder einer Gewindeschnecke verschiebbar. Hierdurch kann sicher gestellt werden, daß die Führungen auf beiden Seiten der Sitze immer zur gleichen Höhe ausgefahren sind.

Im Ausführungsbeispiel der Fig. 10b ist eine andere Variante des Hebemechanismus dargestellt. Am Ende der Kolbenstange 41 des Hydraulikzylinders ist ein Ritzel 59 angebracht, das ein zweites Zahnrad trägt, welches mit einer Antriebskette 60 zusammenwirkt. Ein Ende der Antriebskette ist ortsfest gehalten. Wird die Kolbenstange ausgefahren, so erfolgt damit eine zwangsweise Drehung des Ritzels. Dieses Ritzel greift mit seinen Zähnen in eine Zahnstange 61, die ihrerseits an einem Führungsteil 62 verschieblich geführt ist. Durch diese Konstruktion erhält man eine Übersetzung der Kolbenbewegung. Gemäß folgender Beziehung

4

$$\frac{\text{Rahmenteil } 61}{\text{Kette } 60} \quad x \quad \text{Hub der Kolbenstange } 41.$$

Diese Beziehung bestimmt das Anheben bzw. die Höhe des Sitzes.

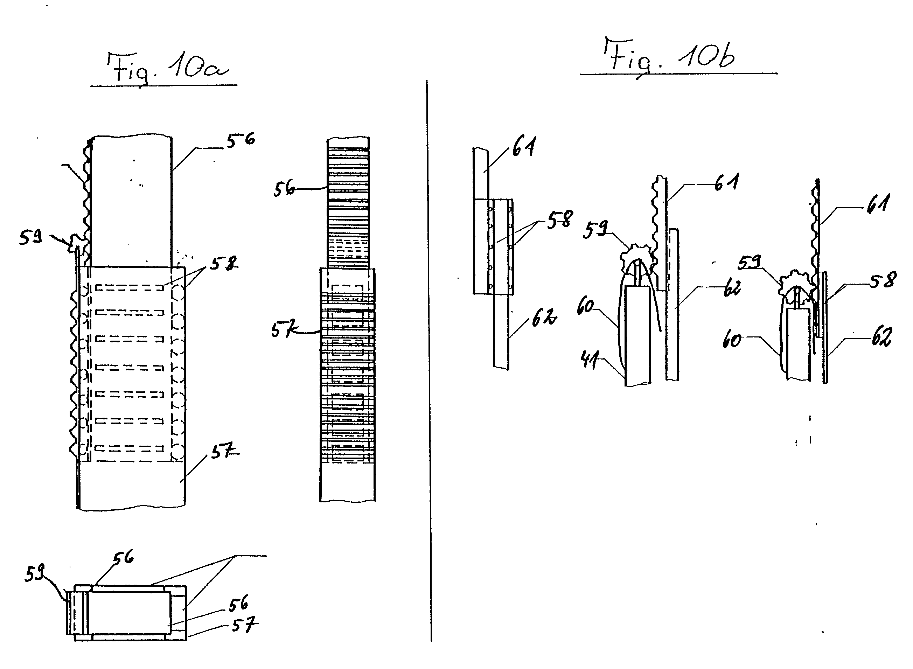

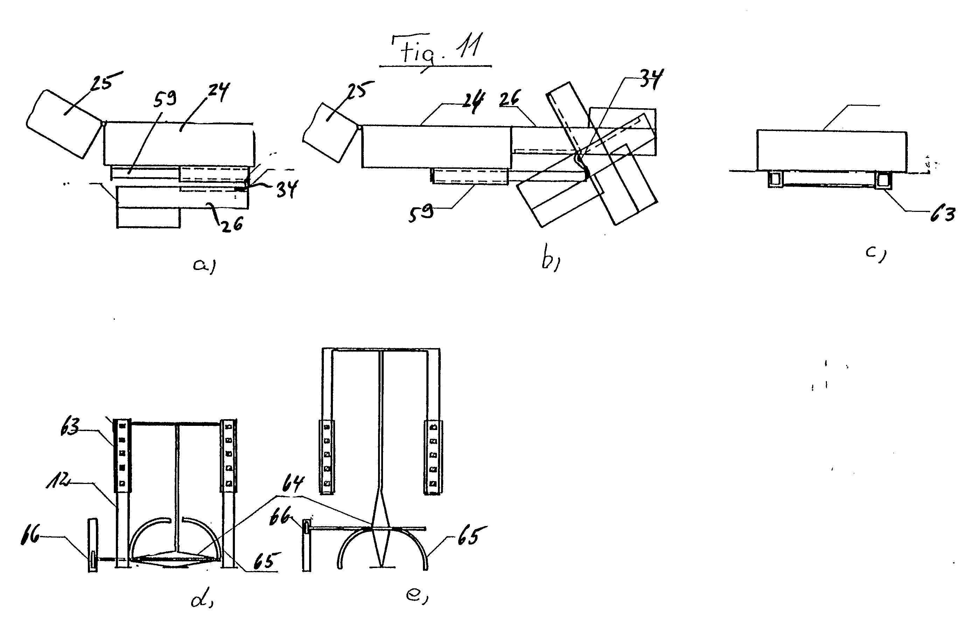

Fig. 11a zeigt die Schließstellung eines einzelnen Sessels. Fig. 11b zeigt die Öffnungsbewegung desselben in Bezug auf die Fußteile. Zunächst wird also das Fußteil 26 vorgeschoben und dann durch Ausfahren der Kolben/Zylinderanordnung 59 von der Position a über die Position b bis in die Bettstellung der Position c geschwenkt (vgl. Pfeilrichtung). Fig. 11c zeigt im Querschnitt die Stützteile, die miteinander in Verbindung stehen. Mit dem Bezugszeichen 63 sind wiederum die Lager für die Gleitbewegung gekennzeichnet. Die Fig. 11d und 11e zeigen einen Schnitt längs der Linie A-A der Fig. 11c. Das Bezugszeichen 4 bezeichnet die Hebeeinrichtung; das Bezugszeichen 64 die Hebeeinrichtung und das Bezugszeichen 65 zeigt Führungen für die Hebeeinrichtung 64. Das Bezugszeichen 66 zeigt schließlich eine Handhabe für die Betätigung der Hebeeinrichtung.

In Fig. 11d ist der jeweilige Sitz in der niedrigsten Stellung, während er in der Fig. 11e in der angehobenen Stellung ist.

**Ansprüche**

1. Schlafsesselanordnung für Busse, Reisezugwagen, Flugzeuge oder Schiffe mit in Sitzreihen hintereinander angeordneten Sesseln (1a ... 10d), deren Rückenlehne (25) gegenüber ihrer Sitzfläche (24) kippbar ist, dadurch gekennzeichnet, daß zumindest die Rückenlehne (25) und die Sitzfläche (24) relativ zueinander derart kippbar sind, daß sie eine im wesentlichen horizontale Ebene (Bett) bilden und weiter gekennzeichnet durch Hebeeinrichtungen (38) zum Anheben und Absenken einzelner Sessel (1, 3, 5, 7, 9), wobei abwechselnd von den hintereinander angeordneten Sesseln einer anhebbar ist (1, 3, 5, 7, 9), während der nächst folgende (2, 4, 6, 8, 10) fest mit dem Boden (22) verbunden ist.

2. Schlafsesselanordnung nach Anspruch 1, dadurch gekennzeichnet, daß die anhebbaren Sessel (1, 3, 7, 9) an seitlichen Stützen (12, 14, 16, 18, 20) gehalten sind.

3. Schlafsesselanordnung nach Anspruch 2, dadurch gekennzeichnet, daß je ein Sesselpaar (1a, 1b; 1c, 1d ... 10c, 10c) von zwei seitlichen Stützen (12a, 12b) gehalten ist und daß die Hebeeinrichtung (38) zwischen den Sesseln eines Sesselpaares angeordnet ist.

4. Schlafsesselanordnung nach einem der Ansprüche 1 bis 3, dadurch gekennzeichnet, daß die Sessel mindestens ein weiteres, schwenkbares Fußteil (26, 27) aufweisen, das schwenkbar an dem zugeordneten Sitzteil (24) befestigt ist und bis in eine horizontale Lage schwenkbar ist.

5. Schlafsesselanordnung nach einem der Ansprüche 1 bis 4, gekennzeichnet durch zusätzliche Sicherheitspfosten (11, 13, 15, 17, 19, 21) an den nicht anhebbaren Sesseln (2, 4, 6, 8, 10), wobei diese Sicherheitspfosten Auflagen bzw. Arretierungen (55) aufweisen zur Abstützung der freien Enden der Rückenlehne (25) und des Fußteiles (26, 27) in deren horizontaler Lage.

6. Schlafsesselanordnung nach einem der Ansprüche 1 bis 5, dadurch gekennzeichnet, daß die Sessel seitliche Sicherheitsblenden (29, 30) aufweisen.

7. Schlafsesselanordnung nach einem der Ansprüche 1 bis 6, dadurch gekennzeichnet, daß die Sessel zusätzlich ein weiteres Fußteil (28) aufweisen, das in der Stellung der Sessel als Bett an dessen Fußende im wesentlichen vertikal steht.

8. Schlafsesselanordnung nach einem der Ansprüche 1 bis 7, dadurch gekennzeichnet, daß die Hebeeinrichtung (38) ein Hydraulik- oder Pneumatikzylinder ist.

9. Schlafsesselanordnung nach einem der Ansprüche 1 bis 8, dadurch gekennzeichnet, daß an den Stützen (12, 14, 16, 18, 20) Arretierungen vorgesehen sind, die die Sessel in der hochgehobenen Position halten.

10. Schlafsesselanordnung nach einem der Ansprüche 1 bis 9, dadurch gekennzeichnet, daß die Stützen (12, 14, 16, 18, 20) Zahnstangen (56, 57; 61) aufweisen, die mit einem Ritzel oder einer Gewindeschnecke (59) verschiebbar sind.

FIG. 1a

FIG. 1c

Fig. 1b

EP 0 313 075 A2

Fig. 2

EP 0 313 075 A2

Fig. 3

Fig. 4

Fig. 5

Fig 6

Fig. 7

EP 0 313 075 A2

Fig.8

Fig. 9a

Fig. 9b

EP 0 313 075 A2

## Fig. 10a

56

59

58

57

56

57

59

56

56

57

## Fig. 10b

61

61

61

58

59

59

60

62

58

41

62

60

62

Fig. 11

a)

b)

c)

d)

e)

EP 0 313 075 A2